# EUROPÄISCHE PATENTSCHRIFT

(11) **EP 2 195 795 B1**
(45) Veröffentlichungstag und Bekanntmachung des Hinweises auf die Patenterteilung: **15.02.2012**
(21) Anmeldenummer: 08802803.0
(22) Anmeldetag: 06.10.2008
(51) Int. Cl.: G01V 8/14, G08C 23/04, G01V 8/10, G08B 17/103, H04Q 9/00

(54) **VORRICHTUNG ZUR STEUERUNG EINES ANGETRIEBENEN BEWEGUNGSELEMENTS, INSBESONDERE EINER TÜR ODER EINES TORES**
DEVICE FOR CONTROLLING A DRIVEN MOVEMENT ELEMENT, PARTICULARLY A DOOR OR A GATE
DISPOSITIF POUR COMMANDER UN ÉLÉMENT MOBILE MOTORISÉ, EN PARTICULIER UNE PORTE OU UN PORTAIL

(30) Priorität: 05.10.2007 DE 202007013986 U
(43) Veröffentlichungstag der Anmeldung: 16.06.2010
(73) Patentinhaber: Cedes AG, 7302 Landquart (CH)
(72) Erfinder: DE COI, Beat, CH-7320 Sargans (CH); NEBIKER, Peter, CH-7208 Malans (Graubünden) (CH); ALBERS, Bas, CH-8820 Wädenswil (CH); LIPPUNER, Daniel, CH-7307 Jenins (CH)
(74) Vertreter: Dobler, Markus
(86) Internationale Anmeldenummer: PCT/EP2008/008442
(87) Internationale Veröffentlichungsnummer: WO 2009/046959

(56) Entgegenhaltungen:
- WO-A-83/02187
- WO-A-03/001187
- WO-A-2006/112431
- FR-A- 2 391 743
- GB-A- 2 334 096
- US-A- 4 614 968

## Beschreibung

Die Erfindung betrifft eine Vorrichtung zur Steuerung eines angetriebenen Bewegungselementes nach dem Oberbegriff des Anspruchs 1.

### Stand der Technik

Bei einem Lift, zum Beispiel Personenlift in einem Gebäude werden regelmäßig die automatischen Lifttüren dahingehend überwacht, ob sich ein Objekt in deren Bewegungsbahn befindet. Ist dies der Fall, wird die Tür nicht geschlossen, damit keine Kollision, zum Beispiel mit einer Person, auftreten kann. Unter normalen Bedingungen ist dies sicherlich ein richtiger Ansatz. Im Fall von einem Brand können aber gravierende Probleme auftreten, da nicht zwischen Rauch und einem Objekt unterschieden wird. Folgendes Szenario kann sich einstellen:

Ein Lift kommt in einem Stockwerk zum stehen, wo es brennt. Die Tür öffnet sich und Rauch tritt in die Liftkabine ein. Personen im Lift möchten so schnell wie möglich diese Etage wieder verlassen. Dies ist aber nicht möglich, da der Türsensor den Rauch als Objekt identifiziert und deshalb eine Steuerung nicht erlaubt, dass die Lifttüren schließen. In einer solchen Situation sind bereits Menschen ums Leben gekommen.

Aus der britischen Patentanmeldung GB 23 15 134 A ist ein Aufzugtürkontrollsystem bekannt, bei welchem die Lifttüren nicht geschlossen werden, wenn von einer Sensorreihe ein Gegenstand detektiert wird. Allerdings wird der Schließaufschub unterdrückt, wenn von einem weiteren Sensor Rauch detektiert wird. Damit lassen sich die Türen schließen, obgleich die Sensorreihe an sich ein Objekt detektiert, wenn der Rauchsensor Rauch feststellt.

Eine solche Ausführungsform ist vergleichsweise aufwändig.

### Aufgabe und Vorteile der Erfindung

Der Erfindung liegt die Aufgabe zugrunde, eine Vorrichtung der eingangs genannten Art bereit zu stellen, die sich vergleichsweise einfacher und kostengünstiger herstellen lässt, ohne dass darunter die Sicherheit leidet.

Diese Aufgabe wird durch die Merkmale des Anspruchs 1 gelöst.

In den Unteransprüchen sind vorteilhafte und zweckmäßige Weiterbildungen der Erfindung angegeben.

Die Erfindung geht von einer Vorrichtung zur Steuerung eines angetriebenen Bewegungselements, wie beispielsweise eine Tür oder ein Tor mit einer Elektronikeinheit aus, die einen Sender für elektromagnetische Strahlung, z. B. Licht, vorzugsweise infrarotes Licht, und einen Empfänger für vom Sender ausgesandte elektromagnetische Strahlung zur Detektion von Objekten auf einem Strahlungs- bzw. Lichtweg zwischen Sender und Empfänger umfasst. Der Kern der Erfindung liegt darin, dass die Elektronikeinheit dazu ausgelegt ist, eine zeitliche Änderung wenigstens eines von der empfangenen elektromagnetischen Strahlung abgeleiteten Merkmals zu erfassen und bei einer Detektion einer über die Zeit vergleichsweise langsamen Änderung des wenigstens einen Merkmals ein Signal auszugeben, dass einer Detektion von Rauch zugeordnet ist. Durch diese Vorgehensweise kann z. B. die gleiche Lichtschrankenanordnung, die zur Detektion von "herkömmlichen" Objekten im Lichtweg eingesetzt wird, zur Detektion von Rauch herangezogen werden. Damit ist für die Rauchdetektion im Wesentlichen kein Mehraufwand an "Hardware" erforderlich, was sich in einem Preisvorteil niederschlägt.

Der Erfindung liegt dabei die Erkenntnis zugrunde, dass beim Auftreten von Rauch keine schlagartige Veränderung des Strahlungs- bzw. Lichtpfades stattfindet, sondern die Ausbreitungsbedingungen für die elektromagnetische Strahlung sich langsam ändern, verglichen mit einer Situation, in welcher sich ein Objekt, zum Beispiel eine Person in den Ausbreitungspfad der elektromagnetischen Strahlung bewegt.

Eine langsame Veränderung eines von der empfangenen elektromagnetischen Strahlung abgeleiteten Merkmals kann sich auf unterschiedliche Parameter der empfangenen elektromagnetischen Strahlung beziehen.

In einer bevorzugten Ausführungsform der Erfindung ist die Elektronikeinheit dazu ausgelegt die Veränderungen eines Merkmals zu erfassen, das die Intensität der empfangenen elektromagnetischen Strahlung widerspiegelt. Bei diesem Ansatz macht man sich den Umstand zunutze, dass bei Auftreten von Rauch eine allmähliche Abschwächung der elektromagnetischen Strahlung im Lichtpfad durch Reflexion und Absorption an Rauchpartikeln stattfindet, was beim Auftreten eines Objekts, zum Beispiel einer Person oder eines Gegenstands im Ausbreitungsweg nicht der Fall ist.

Dementsprechend ist es bevorzugt, wenn die Elektronikeinheit ausgebildet ist, abhängig von der Intensität der empfangenen elektromagnetischen Strahlung ein Signal zu erzeugen, das einer Detektion eines Objekts zugeordnet wird, wenn sich die Intensität sprungartig ändert und ein Signal zu erzeugen, das einer Detektion von Rauch zugeordnet wird, wenn sich die Intensität gemessen an der sprungartigen Änderung der Intensität bei einer Detektion eines Objekts langsamer insbesondere signifikant langsamer ändert. Eine sprungartige Änderung ist beispielsweise dann gegeben, wenn z. B. der Lichtstrahl dadurch unterbrochen wird, dass sich eine Person mit normaler Geschwindigkeit in den Lichtweg hineinbewegt.

In einer bevorzugten Ausführungsform der Elektronikeinheit wird die Zeit ermittelt, von dem Moment an, in dem das Merkmal, das die Intensität widerspiegelt, eine erste Schwelle von oben nach unten unterschreitet bis zu dem Moment, in dem das Merkmal, das die Intensität widerspiegelt, eine zweite niedrigere Schwelle von oben nach unten überschreitet.

Ab einer vorgegebenen Dauer kann die ermittelte Zeit der Detektion von Rauch zugeordnet werden.

Des weiteren ist die Elektronikeinheit in der Lage, eine Distanz, die die elektromagnetische Strahlung vom Sender über eine Reflexionsfläche zum Empfänger zurücklegt, durch eine Auswertung einer Phase einer auf die elektromagnetische Strahlung aufmodulierten Schwingung zu ermitteln, wobei bei einer Detektion am Empfänger von elektromagnetischer Strahlung, die von der modulierten Schwingung aufgrund von mehreren überlagerten Schwingungen mit gleicher Frequenz, aber unterschiedlicher Phasenlage abweicht, auf Rauch im Ausbreitungspfad geschlossen wird. Diese Vorgehensweise macht sich den Umstand zunutze, dass bei einer Reflexion an einer Reflexionsfläche mit definierter Oberfläche das modulierte Signal ohne wesentliche Deformation des modulierten Signals an den Empfänger zurückkehrt. Hingegen findet im Rauch an unterschiedlichen Stellen eine teilweise Reflexion des Lichtsignals statt, wodurch sich am Empfänger unterschiedliche Phasen im Hinblick auf das aufmodulierte Signal ergeben, was eine Veränderung der Form und Amplitude des aufmodulierten Signals zur Folge hat. Diese Veränderung kann für die Rauchdetektion ausgewertet werden.

Bei einer weiteren vorteilhaften Ausführungsform der Erfindung besitzt der Empfänger mehrere separat auswertbare Empfangsbereiche. Des Weiteren ist die Elektronikeinheit in der Lage, eine Distanz, die die elektromagnetische Strahlung vom Sender über eine Reflexionsfläche zum Empfänger zurücklegt, durch eine Auswertung einer Phase einer auf die elektromagnetische Strahlung aufmodulierten Schwingung zu ermitteln, wobei bei einer Detektion einer vergleichsweise langsam sich ändernden Distanz für jeweils die mehreren Empfangsbereiche auf Rauch im Lichtpfad geschlossen wird. Zum Beispiel ist der Empfänger ein Kamerachip mit einer Vielzahl von Bildpunkten. Sofern mit allen oder wenigstens mit einer vorgegebenen Anzahl von Bildpunkten des Kamerachips jeweils eine vergleichsweise langsame Distanz-Änderung gemessen wird, wird daraus auf Rauch geschlossen. Darüber hinaus hat es sich herausgestellt, dass bei Rauch eine Veränderung der gemessenen Distanz der an der Messung beteiligten Bildpunkte hin zu einer gleichen Distanz für alle beteiligten Bildpunkte erfolgt. Hierdurch kann selbst der unwahrscheinliche Fall ausgeschlossen werden, dass sich ein großflächiges Objekt gleichmäßig und langsam auf den Sensor zu bewegt. In diesem Fall würde sich nämlich keine Veränderung der Distanz hin zu gleichen Distanzen für die an der Messung beteiligten Bildpunkte ergeben.

In einer überdies bevorzugten Ausgestaltung der Erfindung sind mehrere Empfänger und Sender vorgesehen, die die erfindungsgemäße Funktionalität besitzen. Dadurch kann eine ganze Fläche im Hinblick auf Objekte, aber auch Rauch überwacht werden, was die Sicherheit weiter erhöht. Zusätzlich erhält man bei mehreren Empfängern und Sendern eine redundante Funktionalität. Vorzugsweise bilden die Empfänger und Sender einen "Lichtvorhang".

Es ist auch möglich, daß der Empfänger einen Kamerachip umfasst, wobei eine vergleichsweise langsame Abnahme des Kontrasts eines Bildes als Rauch interpretiert wird.

Um einen Ausgangskontrast festzulegen, wird mittels der Elektronikeinheit eine Kante erfasst, aus der sich dann ein Merkmal, das den Kontrast widerspiegelt, ableiten lässt.

Die Vorrichtung zur Steuerung eines angetriebenen Bewegungselements kann Bestandteil einer Türöffnungssteuerung sein, aber genauso ein Teil einer Sicherheitsanordnung, die das Schließen der Tür überwacht. Dabei kann die Lichtschrankenvorrichtung als Lichtvorhang, Lichtschranke, Tastlichtschranke oder Reflexionslichtschranke ausgebildet sein. Die Lichtschrankenvorrichtung kann einen Sensor umfassen, mit welchem eine Distanzmessung wie in Anspruch 6 oder 7, nach dem Time of Flight-Prinzip möglich ist.

In einer weiteren bevorzugten Ausgestaltung ist die Vorrichtung zur Steuerung eines angetriebenen Bewegungselements aktiv, wenn das Bewegungselement, zum Beispiel eine Tür geschlossen ist. Im Fall einer Lifttür kann die Vorrichtung vor dem Öffnen der Lifttür ein Signal abgeben, dass hier nicht ausgestiegen werden soll (weil zum Beispiel Rauchentwicklung detektiert wurde).

Bei dieser Ausgestaltung ist es bevorzugt so, dass sich die Vorrichtung aktiviert oder aktiv bleibt, sobald die Tür geschlossen wird.

Eine erfindungsgemäße Vorrichtung zur Steuerung eines angetriebenen Elements kann darüber hinaus eine zusätzliche Funktionalität dahingehend umfassen, dass ab einer bestimmten detektierten Temperatur ein Signal ausgegeben wird, das der Detektion eines Brandes zugeordnet ist.

In einer besonders bevorzugten Ausgestaltung der Erfindung ist wenigstens der Sender und der Empfänger der Vorrichtung beweglich montiert, zum Beispiel an einer Türe. In diesem Fall kann die Bewegung der Türe eine langsame Veränderung von empfangener elektromagnetischer Strahlung bewirken, was als Rauch interpretiert werden könnte. Um dies zu verhindern ist es bevorzugt, wenn die Vorrichtung einen Eingang umfasst, mit welchem vorübergehend die Rauchdetektion abschaltbar ist.

### Zeichnungen

Mehrere Ausführungsbeispiele der Erfindung sind in den Zeichnungen dargestellt.

Es zeigen
- Figur 1 bis 3: In stark schematisierter dreidimensionaler Darstellung die Funktion eines erfindungsgemäßen optischen Sensors in unterschiedlichen Detektionssituationen,
- Figur 4: ein Schaubild von zwei Intensitätsfunktionen über die Zeit und
- Figur 5 bis 7: eine weitere erfindungsgemäße optische Sensoranordnung in einer stark schematisierten dreidimensionalen Ansicht ebenso wie die erste Ausführungsform in unterschiedlichen Detektionssituationen.

### Beschreibung der Ausführungsbeispiele

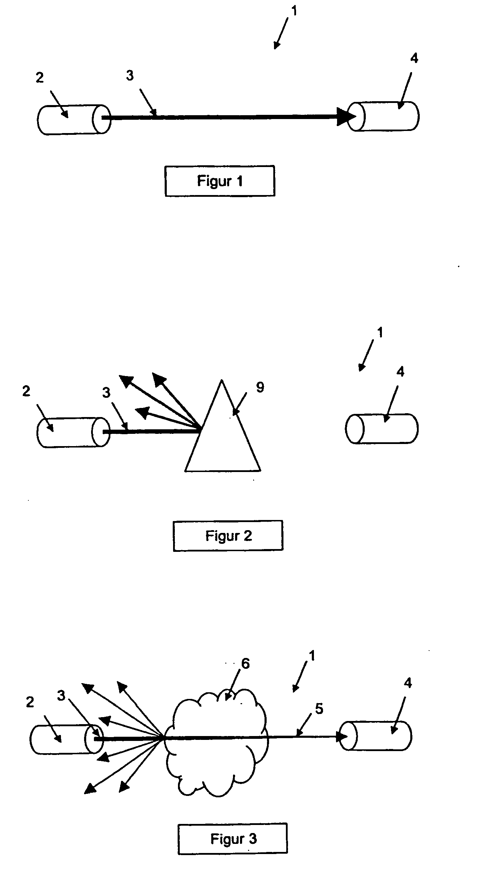

Die Figuren 1 und 2 zeigen eine Lichtsensoranordnung 1 in einem herkömmlichen Detektionsmodus, bei welchem ein Sender 2 Licht 3, vorzugsweise Infrarotlicht, ausstrahlt, das von einem Empfänger 4 empfangen wird. Solange ein Empfang des Lichtes 3 am Empfänger 4 stattfindet, wird dies so interpretiert, dass sich kein Objekt im Pfad des Lichtes 3 befindet. Sobald das Licht 3 den Empfänger nicht mehr erreicht, wie es in Figur 2 dargestellt ist, ordnet die Lichtsensoranordnung 1 dies der Detektion eines Objektes 9 zu.

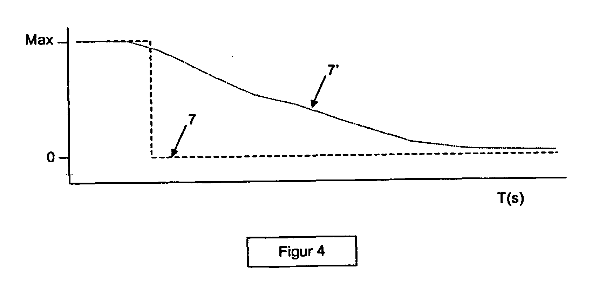

In Figur 3 wird die erfindungsgemäße Lichtsensoranordnung 1 in einem Zustand gezeigt, in welchem Rauch 6 die Intensität des Lichtes 3 schwächt, da ein Teil des Lichtes 3 am Rauch reflektiert wird. Ein Teil 5 erreicht allerdings den Empfänger 4 trotz des Rauchs 6. Abhängig von der Lichtintensität erzeugt der Empfänger 4 ein Signal 7, 7' (siehe hierzu Figur 4).

Die in Figur 4 dargestellten beiden Signale 7, 7' spiegeln folgenden Detektionszustand wider:

Das Signal 7 ist maximal und wird schlagartig auf null reduziert (dies entspricht dem Fall von Figur 2). Ein solcher Signalverlauf interpretiert die Lichtsensoranordnung 1 als ein Objekt im Lichtpfad. Wird das Licht vom Rauch 6 gestört, so verläuft das Signal nicht so abrupt. Das Signal 7' ist am Anfang maximal und fällt langsam ab auf einen Wert, der gegebenenfalls nicht ganz null erreichen muss.

Die Lichtsensoranordnung ist vorzugsweise so ausgelegt, dass ein entsprechend langsamer Verlauf der Intensität des Lichtes als Rauch interpretiert wird.

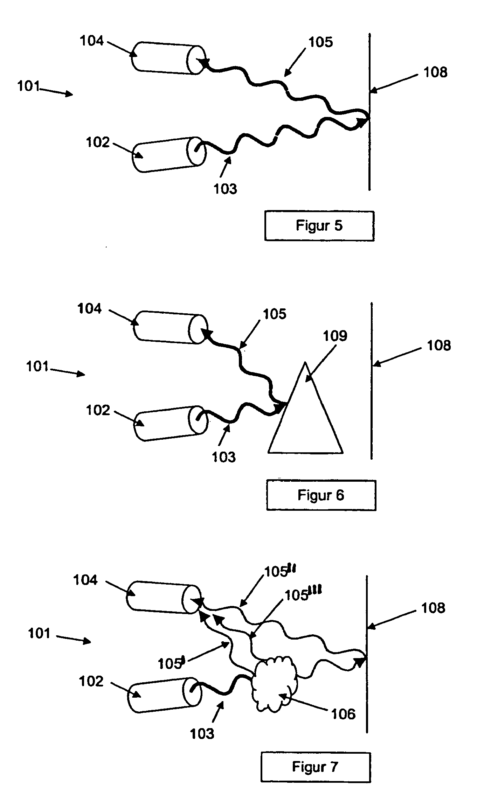

In den Figuren 5 bis 7 ist eine Lichtsensoranordnung 101 dargestellt, die in der Lage ist eine Distanz zu messen. Ein Sensor 102 strahlt moduliertes Licht 103 aus. Das Licht kann zum Beispiel sinusförmig oder anderweitig pulsförmig moduliert sein. Das Licht 103 wird von einer Referenzfläche 108 reflektiert.

Wird das Licht 103 von einem Objekt 109 reflektiert, so verkürzt sich der Lichtpfad, was die Lichtsensoranordnung 101 feststellt und ordnet dieser Verkürzung ein Objekt im Pfad des Lichtes 103 zu.

In Figur 7 trifft das modulierte Licht auf Rauch 106. Ein Teil des Lichtes 105', 105''' wird unmittelbar am Rauch 6 zurück zu einem Empfänger 104 reflektiert. Ein weiterer Teil 105" läuft über die Referenzfläche 108 zurück zum Empfänger 104. Damit kommen am Empfänger 104 Lichtanteile mit zwar gleicher Frequenz, aber unterschiedlichen Phasenlagen aufgrund der Distanzunterschiede an. Die Lichtsensoranordnung ist vorzugsweise in der Lage unmittelbar oder mittelbar diese unterschiedlichen Phasenlagen auszuwerten, die nicht oder nicht in dem Maße auftreten, wenn eine Reflexion an der Referenzfläche 108 oder am Objekt 109 erfolgt und entsprechend ein Signal auszugeben, das der Detektion von Rauch zugeordnet ist.

## Patentansprüche

1. Vorrichtung (1, 101) zur Steuerung eines angetriebenen Bewegungselements
- mit einer Elektronikeinheit, die
- einen Sender (2, 102) für elektromagnetische Strahlung, z. B. Licht, insbesondere infrarotes Licht und
- einen Empfänger (4, 104)
- für vom Sender ausgesandte elektromagnetische Strahlung
- zur Detektion von Objekten (9, 109)
- auf einem Ausbreitungsweg zwischen Sender (2,102) und Empfänger (4, 104) umfasst,
- wobei eine Detektion eines Objekts erfolgt,
- wenn sich das Objekt in den Ausbreitungsweg der elektromagnetischen Strahlung bewegt
- und dadurch eine Veränderung des Ausbreitungsweges stattfindet,
**dadurch gekennzeichnet, dass**
- die Elektronikeinheit dazu ausgelegt ist,
- eine zeitliche Änderung wenigstens eines von der empfangenen elektromagnetischen Strahlung (5, 105, 105', 105", 105"') abgeleiteten Merkmals zu erfassen
- und die Elektronikeinheit dazu ausgelegt ist, die Zeit zu ermitteln,
- von dem Moment an, in dem das Merkmal, eine erste Schwelle von oben nach unten unterschreitet
- bis zu dem Moment, in dem das Merkmal, eine zweite niedrigere Schwelle von oben nach unten überschreitet
- und ab einer vorgegebenen Dauer der ermittelten Zeit
- die ermittelte Zeit der Detektion von Rauch zuzuordnen.

2. Vorrichtung nach Anspruch 1, **dadurch gekennzeichnet, dass** die Elektronikeinheit dazu ausgelegt ist, ein Merkmal zu erfassen, das die Intensität der empfangenen elektromagnetischen Strahlung (5, 105, 105', 105", 105"') widerspiegelt.

3. Vorrichtung nach Anspruch 1 oder 2, **dadurch gekennzeichnet, dass** die Elektronikeinheit ausgebildet ist, abhängig von der Intensität einer empfangenen elektromagnetischen Strahlung (5) ein Signal zu erzeugen, das einer Detektion eines Objekts (9) zugeordnet wird, wenn sich die Intensität sprungartig ändert und ein Signal zu erzeugen, das einer Detektion von Rauch (6) zugeordnet wird, wenn sich die Intensität gemessen an der sprungartigen Änderung der Intensität bei einer Detektion eines Objekts langsam ändert.

4. Vorrichtung nach einem der vorhergehenden Ansprüche, **dadurch gekennzeichnet, dass** die Elektronikeinheit in einer vorgegebenen Zeit mehrere Messungen eines Merkmals vornimmt, das die Intensität der empfangenen elektromagnetischen Strahlung (5) widerspiegelt.

5. Vorrichtung nach einem der vorhergehenden Ansprüche, **dadurch gekennzeichnet, dass** der Empfänger mehrere separat auswertbare Empfangsbereiche besitzt und dass die Elektronikeinheit in der Lage ist, eine Distanz, die die elektromagnetische Strahlung (103, 105) vom Sender über eine Reflexionsfläche (108) zum Empfänger (104) zurücklegt, durch eine Auswertung einer Phase einer auf die elektromagnetische Strahlung aufmodulierten Schwingung zu ermitteln, wobei bei einer Detektion einer vergleichsweise langsam sich ändernden Distanz für jeweils die mehreren Empfangsbereiche auf Rauch (106) im Lichtpfad geschlossen wird.

6. Vorrichtung nach einem der vorhergehenden Ansprüche, **dadurch gekennzeichnet, dass** der Empfänger mehrere separat auswertbare Empfangsbereiche besitzt und dass die Elektronikeinheit in der Lage ist, eine Distanz, die die elektromagnetische Strahlung (103, 105) vom Sender über eine Reflexionsfläche (108) zum Empfänger (104) zurücklegt, durch eine Auswertung einer Phase einer auf die elektromagnetische Strahlung aufmodulierten Schwingung zu ermitteln, wobei bei einer Detektion einer vergleichsweise langsam sich ändernden Distanz hin zu einer gleichen Distanz für jeweils die mehreren Empfangsbereiche auf Rauch (106) im Lichtpfad geschlossen wird.

7. Vorrichtung nach einem der vorhergehenden Ansprüche, **dadurch gekennzeichnet, dass** mehrere Empfänger (4, 104) und Sender (2, 102) vorgesehen sind.

8. Vorrichtung nach einem der vorhergehenden Ansprüche, **dadurch gekennzeichnet, dass** der Empfänger einen Kamerachip umfasst.

## Claims

1. Device (1, 101) for controlling a driven movement element
- with an electronic unit, which comprises
- a transmitter (2, 102) for electromagnetic radiation, e.g. light, in particular infrared light and
- and a receiver (4, 104)
- for electromagnetic radiation emitted by the transmitter
- for the detection of objects (9, 109)
- on a propagation path between the transmitter (2, 102) and the receiver (4, 104),
- wherein an object is detected,
- when the object moves into the propagation path of the electromagnetic radiation
- and thereby a change occurs in the propagation path,
**characterised in that**
- the electronic unit is set up,
- to detect a temporal change of at least one feature derived from the received electromagnetic radiation (5, 105, 105', 105", 105"'),
- and the electronic unit is set up to determine the time
- from the moment at which the feature falls below a first threshold from top to bottom,
- to the moment at which the feature exceeds a second lower threshold from top to bottom,
- and from a predefined duration of determined time
- to allocate the determined time of detecting smoke.

2. Device according to claim 1, **characterised in that** the electronic unit is set up to detect a feature which mirrors the intensity of the received electromagnetic radiation (5, 105, 105', 105", 105"').

3. Device according to claim 1 or 2, **characterised in that** the electronic unit is designed, depending on the intensity of received electromagnetic radiation (5), to generate a signal that is associated with the detection of an object (9), if the intensity changes abruptly, and to generate a signal that is associated with the detection of smoke (6), if the intensity changes slowly as measured against the abrupt change in the intensity upon the detection of an object.

4. Device according to any one of the preceding claims, **characterised in that** electronic unit performs at a predefined time several measurements of a feature that reflects the intensity of the received electromagnetic radiation (5).

5. Device according to any one of the preceding claims, **characterised in that** the receiver has a plurality of reception areas that are evaluated separately, and **in that** the electronic unit is able to determine a distance that the electromagnetic radiation (103, 105) covers from the transmitter via a reflection surface (108) to the receiver (104) by evaluating a phase of an oscillation modulated onto the electromagnetic radiation, wherein upon detection of a comparatively slowly changing distance for the plurality of reception areas respectively, it is concluded that there is smoke (106) in the light path.

6. Device according to any one of the preceding claims, **characterised in that** the receiver has a plurality of reception areas that are evaluated separately, and **in that** the electronic unit is able to determine a distance that the electromagnetic radiation (103, 105) covers from the transmitter via a reflection surface (108) to the receiver (104) by evaluating a phase of an oscillation modulated onto the electromagnetic radiation, wherein upon detection of a comparatively slowly changing distance to an identical distance for the plurality of reception areas resepctively, it is concluded that there is smoke (106) in the light path.

7. Device according to any one of the preceding claims, **characterised in that** a plurality of receivers (4, 104) and transmitters (2, 102) are provided.

8. Device according to any one of the preceding claims, **characterised in that** the receiver comprises a camera chip.

## Revendications

1. Dispositif de commande (1, 101) d'un élément mobile motorisé comprenant :
- une unité électronique ayant :
* un émetteur (2, 102) de rayonnement électromagnétique, par exemple la lumière et notamment la lumière infrarouge, et
* un récepteur (4, 104), du rayonnement électromagnétique émis par l'émetteur,
* pour détecter des objets (9, 109),
** sur le chemin de propagation entre l'émetteur (2, 102) et le récepteur (4, 104),
dispositif dans lequel la détection d'un objet se fait :
** si l'objet se déplace dans le chemin de propagation du rayonnement électromagnétique, et
** produit ainsi une modification du chemin de propagation, dispositif **caractérisé en ce que**
- l'unité électronique est conçue pour :
* saisir une variation dans le temps d'au moins une caractéristique déduite du rayonnement électromagnétique reçu (5, 105, 105', 105", 105"'), et
- l'unité électronique est conçue pour déterminer le temps compris entre :
* l'instant auquel la caractéristique,
** dépasse vers le haut ou vers le bas un premier seuil,
* et l'instant auquel la caractéristique,
** dépasse vers le haut ou vers le bas un second seuil plus bas, et
- à partir d'une durée prédéterminée, du temps obtenu,
** ce temps obtenu est associé à de la fumée.

2. Dispositif selon la revendication 1,
**caractérisé en ce que**
l'unité électronique est conçue pour saisir une caractéristique qui représente l'intensité du rayonnement électromagnétique reçu (5, 105, 105', 105", 105"').

3. Dispositif selon la revendication 1 ou 2,
**caractérisé en ce que**
l'unité électronique est conçue pour qu'en fonction de l'intensité d'un rayonnement électromagnétique reçu (5), elle génère un signal associé à la détection d'un objet (9) si l'intensité varie brusquement et pour générer un signal associé à une détection de fumée (6) si l'intensité mesurée au niveau de la variation brusque de l'intensité, change lentement lors de la détection d'un objet.

4. Dispositif selon l'une des revendications précédentes,
**caractérisé en ce que**
dans une durée prédéfinie, l'unité électronique effectue plusieurs mesures d'une caractéristique représentant l'intensité du rayonnement électromagnétique reçu (5).

5. Dispositif selon l'une des revendications précédentes,
**caractérisé en ce que**
- le récepteur comporte plusieurs plages de réception exploitables séparément, et
- l'unité électronique détermine la distance parcourue par le rayonnement électromagnétique (103, 105) à partir de l'émetteur tombant sur une surface de réflexion (108) et renvoyé vers le récepteur (104) par l'exploitation de la phase d'une oscillation modulant le rayonnement électromagnétique,
* et en cas de détection d'une distance qui varie relativement lentement pour chacune des différentes plages de réception, on conclut qu'il y a de la fumée (106) sur le chemin du faisceau lumineux.

6. Dispositif selon l'une des revendications précédentes,
**caractérisé en ce que**
- le récepteur comporte plusieurs plages de réception exploitables séparément, et
- l'unité électronique détermine la distance parcourue par le rayonnement électromagnétique (103, 105) à partir de l'émetteur, tombant sur une surface de réflexion (108) et renvoyé vers le récepteur (104) par l'exploitation de la phase d'une oscillation modulant le rayonnement électromagnétique,
* et en cas de détection d'une distance variant relativement lentement par rapport à la même distance pour chacune des différentes plages de réception, on conclut qu'il y a de la fumée (106) dans le chemin du rayon lumineux.

7. Dispositif selon l'une des revendications précédentes,
**caractérisé par**
plusieurs récepteurs (4, 104) et émetteurs (2, 102).

8. Dispositif selon l'une des revendications précédentes,
**caractérisé en ce que**
le récepteur comporte une puce de caméra.
